# EUROPEAN PATENT SPECIFICATION

(11) **EP 0 434 155 B1**
(45) Date of publication and mention of the grant of the patent: **15.03.1995**
(21) Application number: 90203351.3
(22) Date of filing: 17.12.1990
(51) Int. Cl.: F21M 7/00

(54) **Motor vehicle headlamp and reflector body for same**
KFZ-Scheinwerfer und sein Reflektorgehäuse
Phare pour véhicules et son corps projecteur

(30) Priority: 21.12.1989 NL 8903129
(43) Date of publication of application: 26.06.1991
(73) Proprietor: Philips Electronics N.V., 5621 BA Eindhoven (NL)
(72) Inventor: Van Heeswijk, Johannes Antonius Adrianus Maria, NL-5656 AA Eindhoven (NL)
(74) Representative: Rooda, Hans

(56) References cited:
- EP-A- 0 179 524
- BE-A- 642 321
- DE-A- 2 853 227
- DE-A- 3 128 346
- FR-A- 2 370 230
- US-A- 4 310 772

## Description

The invention relates to a motor vehicle headlamp comprising:
- a translucent lamp vessel which is sealed in a vacuum-tight manner and is provided with an axis and an end portion having a seal;
- a light source having an axis and positioned in the lamp vessel;
- current supply conductors which are connected to the light source and which extend from the lamp vessel to the exterior;
- a holder body provided with
   . electrically mutually insulated contacts facing away from the lamp vessel, which contacts are connected to the current supply conductors;
   . a metal retaining member which is fastened to the end portion of the lamp vessel without cement, which retaining member has a portion which extendsalong side the axis of the lamp vessel;
   . a positioning member having references for positioning the lamp vessel inside a reflector body;
   . a metal coupling member connected to the positioning member and telescopically fastened to the retaining member.

The invention also relates to a reflector body provided with an opening which has a boundary for cooperating with a holder body of a motor vehicle headlamp.

Such a lamp and such a reflector body are known from US 4,634,920.

In a known lamp, the light source is aligned relative to the references at the positioning member by shifting of the metal retaining member up to the correct depth in the coupling member, and by tilting and/or rotating of the retaining member. This alignment is necessary for each individual lamp because the position of the light source in the lamp vessel differs from lamp to lamp.

A disadvantage of the known lamp is that its construction does make it possible to arrange a point of the light source, for example the centre of the light source, in a pre-determined position relative to the references of the positioning member, but not the entire light source. Thus, the light source may be positioned askew in the lamp vessel when the light source is positioned longitudinally in the lamp vessel, so that it is not possible to have this light source coincide with a reference line determined by the references. In addition, it may be impossible in the case of a transversely positioned light source to give the axis of the light source the correct direction and at the same time to give the light source the correct position relative to the references.

The accurate alignment of the light source relative to references is equally impossible in the motorcar headlamp disclosed in, for example, US 4,119,877. Here the lamp vessel is rigidly connected to a holder body without alignment of the light source, while the light source is subsequently aligned relative to a positioning member, a ring not shown in the said Patent, which ring is then fastened to the coupling member.

An incorrect position of a light source, especially of a light source which is to produce a passing beam, is undesirable, however, since it can cause glare.

The invention has for its object to provide a lamp of the type described in the opening paragraph which is of a simple construction and which renders it possible inter alia to position the light source accurately relative to the references.

According to the invention, this object is achieved in that the positioning member is a separate metal part of the holder body, to which the coupling member is fastened, and in that the coupling member, before being fastened to the positioning member, can be shifted in mutually perpendicular directions over a surface of this positioning member.

It is advantageous if the coupling member is provided with a, possibly interrupted, outwardly flanged rim, for example in the form of outwardly flanged tags which make contact with the positioning member, because for example welded joints, for example resistance welds of laser welds, can be realised more easily then.

The positioning member may be plate-shaped and may carry the contacts of the lampholder. Alternatively, the positioning member may be ring-shaped while the coupling member carries the contacts, which contacts are accessible through the opening in the ring-shaped positioning member.

The light source may be, for example, a helically coiled incandescent body or a pair of electrodes between which a discharge takes place during operation. In this latter case the line connecting the electrodes, the centreline of the discharge, is the axis of the light source. The light source axis may be approximately in axial direction of the lamp vessel or transverse to it.

The metal retaining member may be provided with resilient tags which keep the end portion of the lamp vessel clamped in, as disclosed in US 4,119,877 cited. Alternatively, it is possible for the retaining member to comprise a tubular section which grips with clamping fit around the end portion.

The retaining member may grip around the coupling member with the portion extending along the axis of the lamp vessel, or it may lie inside this coupling member. A close fit of these parts is not necessary if they are interconnected with laser welds or with solder. If resistance welding is used, the member surrounding the other member may comprise tongues which are pressed against the other member during welding, such as is the case in, for example, US 4,634,920 cited.

The retaining member may be indetachably connected to a reflector body, the reflector body surrounding the light source in order to form a sealed-beam lamp. Alternatively, the lamp may be mounted exchangeably in a reflector. It is usual in this case for a positioning member and the boundary of the opening in a reflector body, through which the lamp vessel is inserted in the reflector, to be shaped in such a way that the lamp can only be accommodated in the reflector body in one rotational position around its own axis. This, however, does not always guarantee that the light source will take up the correct position inside the reflector body. Both the opening in the reflector body and the positioning member may have a dimensional spread, so that a mounted lamp may be displaced sideways to a lesser or greater extent.

In a particular embodiment, the positioning member has a circumference comprising a first and a second circumference portion which lie on the same circle and which make an acute angle with one another. These portions are designed to cooperate with support surfaces present on respective legs of a V and lying on the boundary of an opening in a reflector body. The circumference of the positioning member further carries a tag designed to cooperate with the reflector body and restricting the rotation possibility of the lamp about an own axis in the reflector body. Opposite the circular circumference portions there is a pressure application spot at the holder body, for example at the coupling member or at the positioning member. Upon insertion in a reflector, a pressure member bears on this spot, pressing the positioning member against the support surfaces lying on the legs of a V. In this way the electrical element of each lamp takes up an accurately determined position inside the reflector body if the positioning member was held in a corresponding way in an aligning unit during the alignment of the electrical element.

It is favourable to bend out the positioning member cylindrically in the location of the first and the second circumference portion and in the location of the pressure application spot. It can thus be prevented, in the case of use of a synthetic material in the reflector body, that the positioning member is pressed into the synthetic material, which would adversely affect the accuracy of lamp positioning.

The reflector body according to the invention is characterized in that the boundary of the opening has a first and a second support surface lying on the legs of a V having an obtuse angle, and in that it comprises on the opposite side a pressure member aimed in the direction of the bisector of the V.

Embodiments of the motor vehicle headlamp and the reflector body according to the invention are shown in the drawings, in which
Fig. 1 shows an embodiment of a lamp in side elevation,
Fig. 2 shows another embodiment of a positioning member in an elevation of the side facing away from a lamp vessel,
Fig. 3 shows the positioning member of Fig. 2 taken on III, and
Fig. 4 shows the rear elevation of a reflector body.

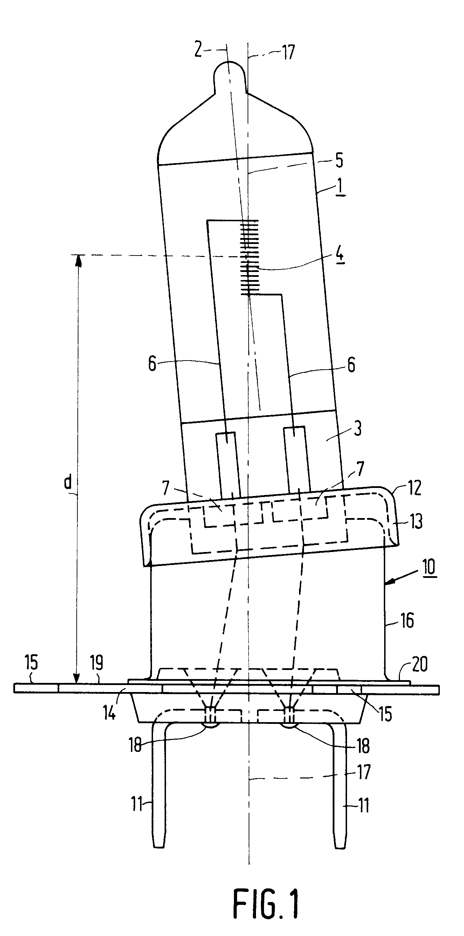

The motor vehicle headlamp of Fig. 1 has a translucent lamp vessel 1, which is sealed in a vacuum-tight manner, and which is made of, for example, glass, for example with an SiO₂ content of at least 95% by weight, such as quartz glass. The lamp vessel has an axis 2 and a seal 3. A light source 4 having an axis 5 is arranged in the lamp vessel. In the drawing, the direction of the axis 5 deviates by an acute angle from the direction of the axis 2 of the lamp vessel. The deviation is represented on an exaggerated scale. Current supply conductors 6, which project from the lamp vessel 1 to the exterior, are connected to the light source 4, an incandescent body of, for example, tungsten in the drawing. A holder body 10 has mutually electrically insulated contacts 11 which are connected to the current supply conductors, for example with soldered joints 18. A metal retaining member 12 provided with a portion 13 extending along the axis 2 of the lamp vessel 1 is fastened to the end portion 3 of the lamp vessel 1 without cement, for example by means of resilient tags 7 stamped from this member. A positioning member 14 of the holder body 10 has references 15 for positioning the lamp inside a reflector body.

A metal coupling member 16 is connected to the positioning member 14 and fastened to the retaining member 12, for example by means of laser welds.

The positioning member 14 is a separate metal part of the holder body 10, to which the coupling member 16 is fastened with the light source 4 in a pre-determined position relative to this positioning member 14, in the drawing perpendicular thereto, but in an alternative embodiment, for example, parallel thereto.

In Fig. 1, the positioning member 14 carries the contacts 11. This member 14 has a reference line 17 whose position is determined by the references 15. In the lamp shown the incandescent body 4 should be positioned on the reference line 17, be concentric with it, and furthermore have a pre-determined distance d to the positioning member 14. This is realised in spite of the skew position of the incandescent body 4 in the lamp vessel 1 in that the holder body has two joints which are fixed after adjustment: a first joint between the retaining member 12 and the coupling member 16, and a second joint between the coupling member 16 and the positioning member 14. Rotation about the axis 2 of the lamp vessel 1 may be possible around the first joint if the said members are constructed as circular cylinders, which may be important in the case of an asymmetrical light source, for example, a light source which cooperates optically with a dipping cap. Furthermore, tilting of the lamp vessel 1 is possible in order to align the axis 5 of the incandescent body 4 relative to the reference line 17. Shifting of the said members 12, 16 relative to one another is also possible in order to set the distance d. The second joint, between the members 14 and 16, makes it possible to have the axis 5 coincide with the reference line 17 by shifting the coupling member 16 over the surface 19 in two mutually perpendicular directions. In addition, the coupling member 16 can be rotated if the light source 4 itself, or in conjunction with a dipping cap, is not rotationally symmetrical. In fact, this renders it unnecessary for the joint between the members 12 and 16 to be capable of rotation. The coupling member 16 has a flanged rim 20 on which, for example, welded joints with the positioning member are made.

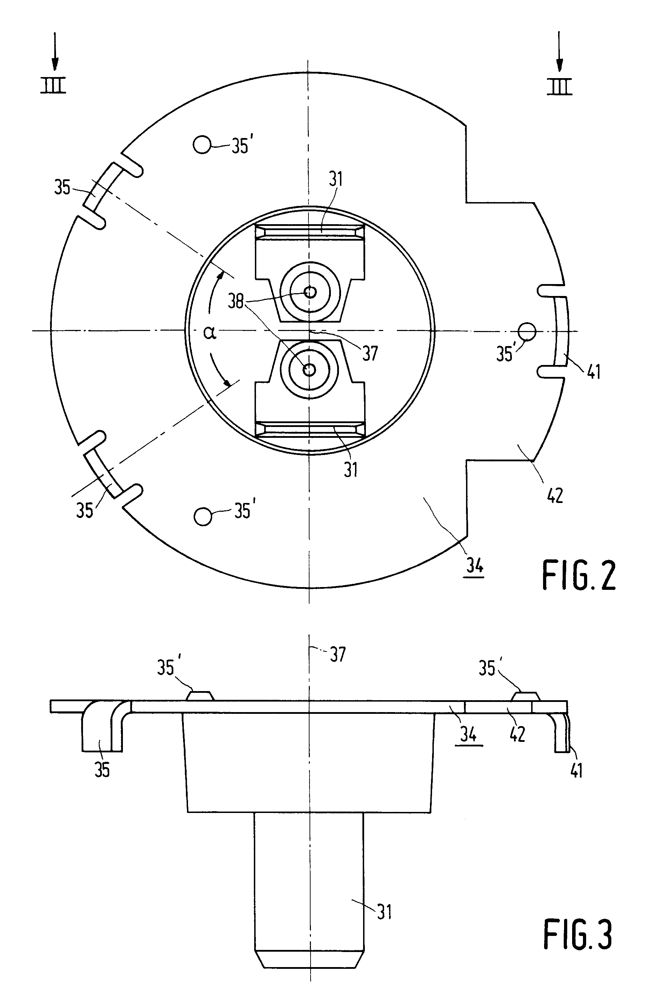

In Figs. 2 and 3, parts corresponding to parts in Fig. 1 have been given reference numerals which are 20 higher.

The positioning member 34 has references 35, which determine the spot where the imaginary reference line 37 intersects the member, and references 35' in the form of stamped elevations which define a plane to which the reference line 37 is perpendicular. This fully defines the reference line. The distance d from the light source (4 in Fig. 1) to the positioning member is determined in these Figures by the tops of the stamped elevations 35'. The references 35 in these Figures are cylindrically flanged tongues which form a first and a second circular circumference portion of the positioning member 34. The centre lies at 37. The references are under an acute angle α relative to one another. Opposite these references there is a pressure application spot 41, in the Figures also a cylindrically flanged tongue. The positioning member 34 has at its circumference a projecting tag 42 which has the function of limiting the rotation possibility of the member in conjunction with a reflector body. In the Figures, this tag lies within the circle on which the references 35 lie, but in alternative embodiments this tag may project outside this circle. It is also possible for the tag to extend over a much greater angle around the reference line 37 towards the references 35 or, alternatively, to lie between these references.

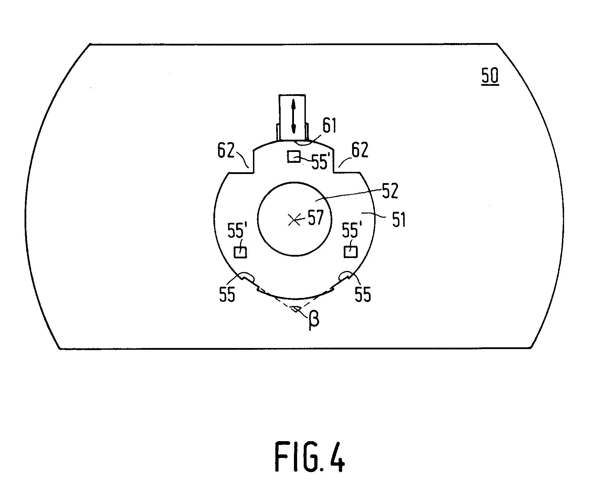

In Fig. 4, the reflector body 50 has a recessed boundary 51 of an opening 52. This boundary comprises support surfaces 55 situated on the legs of a V having an obtuse angle ß, which surfaces are to cooperate with the cylindrically flanged tongues 35 of Figs. 2 and 3, and comprises elevations 55' which are to cooperate with the references 35', so that the light source projects into the reflector body over the correct distance d (see Fig. 1). A pressure member 61 acting in the direction of the bisector of angle ß towards the support surfaces 55 is also present. Recess corners 62 are to cooperate with the tag 42. The support surfaces 55 together with the elevations 55' define the location and direction of a reference line, for example, the optical axis of the reflector body 57.

The reflector body is suitable for exchangeably accommodating a lamp having a positioning member according to Figs. 2 and 3, or for being permanently connected to such a lamp with, for example, solder, glue, glass enamel, or cement to form a sealed-beam lamp.

## Claims

1. A motor vehicle headlamp comprising
- a translucent lamp vessel (1) which is sealed in a vacuum-tight manner and is provided with an axis (2) and an end portion (3) having a seal;
- a light source (4) having an axis (5) and positioned in the lamp vessel;
- current supply conductors (6) which are connected to the light source and which extend from the lamp vessel to the exterior;
- a holder body (10)provided with
. electrically mutually insulated contacts (11) facing away from the lamp vessel, which contacts are connected to the current supply conductors (6);
. a metal retaining member (12) which is fastened to the end portion (3) of the lamp vessel (1) without cement, which retaining member has a portion (13) which extends alongside the axis of the lamp vessel;
. a positioning member (14) having references ((15) for positioning the lamp vessel (1) inside a reflector body;
. a metal coupling member (16) connected to the positioning member (14) and telescopically fastened to the retaining member (12),
characterized in that the positioning member (14) is a separate metal part of the holder body (10), to which the coupling member (16) is fastened, and in that the coupling member (16), before being fastened to the positioning member (14), can be shifted in mutually perpendicular directions over a surface (19) of this positioning member (14).

2. A motor vehicle headlamp as claimed in Claim 1,
characterized in that the coupling member (16) has an outwardly flanged rim (20) which is in contact with the positioning member (14).

3. A motor vehicle headlamp as claimed in Claim 1 or 2,
characterized in that the positioning member (14) is plate shaped and carries the contacts (11) of the holder body (10).

4. A motor vehicle headlamp as claimed in Claim 1, 2 or 3, characterized in that the positioning member (34) has a first and a second circumference portion (35), which portions lie on one and the same circle, are cylindrically flanged, and form an acute angle (α) with one another.

5. A motor vehicle headlamp as claimed in Claim 4,
characterized in that the positioning member (34) has a flanged tongue (41) opposite the first and the second circumference portions (35).

6. A motor vehicle headlamp as claimed in Claim 5,
characterized in that the positioning member (34) has a projecting tag (42) at its circumference.

7. A reflector body (50) provided with an opening (52) with a boundary (51) designed to cooperate with a holder body of a motor vehicle headlamp as claimed in claim 4, 5 or 6, characterized in that the boundary (51) of the opening (52) has a first and a second support surface (55) lying on the legs of a V having an obtuse angle (β) and on the opposite side a pressure member (61) directed towards the V.

## Patentansprüche

1. Autoscheinwerfer mit folgenden Elementen
- einem durchscheinenden vakuumdicht geschlossen Lampenkolben (1) mit einer Achse (2) und einem Endanteil (3) mit einer Abdichtung,
- einer Lichtquelle (4) mit einer Achse (5) und im Lampenkolben,
- Stromzuführungsleitern (6), die mit der Lichtquelle verbunden sind und sich vom Lampenkolben nach außen hin erstrecken,
- einem Fassungskörper (10) mit folgenden Elementen
. elektrisch gegenseitig isolierten Kontakten (11), die vom Lampenkolben abgewandt und mit den Stromzuführungsleitern (6) verbunden sind,
. einem Metall-Halteelement (12), das mit dem Endanteil (3) des Lampenkolbens (1) ohne Zement befestigt ist und einen Anteil (13) enthält, der sich auf der Achse des Lampenkolbens erstreckt,
. einem Positionierelement (14) mit Bezugsstellen (15) zum Positionieren des Lampenkolbens (1) in einem Reflektorkörper,
. einem mit dem Positionierelement (14) verbundenen Metall-Koppelelment (16), das am Halteelement (12) teleskopisch befestigt ist,
dadurch gekennzeichnet, daß das Positionierelement (14) ein getrennter Metallteils des Fassungskörpers (10) ist, and dem das Koppelelement (16) befestigt wird, und daß das Koppelelement (16) vor der Befestigung am Positionierelement (14) in gegenseitig senkrechten Richtungen über eine Oberfläche (19) dieses Positionierelements (14) verschoben werden kann.

2. Autoscheinwerfer nach Anspruch 1, dadurch gekennzeichnet, daß das Koppelelement (16) einen nach außen umgebördelten Rand (20) hat, der mit dem Positionierelement (14) in Kontakt steht.

3. Autoscheinwerfer nach Anspruch 1 oder 2, dadurch gekennzeichnet, daß das Positionierelement (14) blechförmig ist und die Kontakte (11) des Fassungskörpers (10) trägt.

4. Autoscheinwerfer nach Anspruch 1, 2 oder 3, dadurch gekennzeichnet, daß das Positionierelement (14) einen ersten und einen zweiten Umfangsanteil (35) enthält, die auf einem und emselben Kreis liegen, zylindrisch umgebördelt sind und einen spitzen Winkel (α) zueinander einschließen.

5. Autoscheinwerfer nach Anspruch 4, dadurch gekennzeichnet, daß das Positionierelement (34) eine umgebördelte Zunge (41) gegenüber den ersten und den weiten Umfangsanteilen (35).

6. Autoscheinwerfer nach Anspruch 5, dadurch gekennzeichnet, daß das Postionierelement (34) eine herausragende Zunge (42) an seinem Umkreis enthält.

7. Reflektorkörper (50) mit einer Öffnung (52) mit einer Begrenzung (51) zum Zusammenarbeiten mit einem Fassungskörper eines Autoscheinwerfers nach Anspruch 4, 5 oder 6, dadurch gekennzeichnet, daß die Begrenzung (51) der Öffnung (52) auf den Schenkeln eines V eine erste und eine zweite Trägerfläche (55) mit einem stumpfen Winkel (β) und ein nach dem V gerichtetes Druckelement (61) enthält.

## Revendications

1. Phare pour véhicules comportant:
- un récipient de lampe (1) transmettant la lumière, fermé de façon étanche au vide, muni d'un axe (2) et d'une partie terminale (3) présentant une fermeture;
- une source lumineuse (4) présentant un axe (15), qui est positionnée dans le récipient de lampe;
- des conducteurs d'alimentation de courant (6) reliés à la source lumineuse et s'étendant vers l'extérieur en traversant le récipient de lampe,
- un corps de support (10) comportant
. des contacts (11) mutuellement isolés de façon électrique situés à l'opposé du récipient de lampe et reliés aux conducteurs d'alimentation de courant (6);
. un élément de retenue métallique (12) qui, sans ciment, est fixé à la partie terminale (3) du récipient de lampe (1) et qui présente une partie (13) s'étendant le long de l'axe du récipient de lampe;
. un élément de positionnement (14) présentant des référencés (15) pour positionner le récipient de lampe (1) à l'intérieur d'un corps de réflecteur;
. un élément de couplage métallique (16) relié à l'élément de positionnement (14) et fixé téléscopiquement à l'élément de retenue (12),
caractérisé en ce que l'élément de positionnement (14) est une partie métallique individuelle du corps de support (10) auquel est fixé l'élément de couplage (16), et en ce que l'élément de couplage (16), avant d'être fixé à l'élément de positionnement (14), peut être déplacé sur une surface (19) dudit élément de positionnement (14) dans des directions mutuellement perpendiculaires.

2. Phare pour véhicules selon la revendication 1, caractérisé en ce que l'élément de couplage (16) présente un bord (20) plié vers l'extérieur, qui est en contact avec l'élément de positionnement (14).

3. Phare pour véhicules selon la revendication 1 ou 2, caractérisé en ce que l'élément de positionnement (14) est en forme de plaque et qu'il porte les contacts (11) du corps de support (10).

4. Phare pour véhicules selon la revendication 1, 2 ou 3, caractérisé en ce que l'élément de positionnement (34) présente des première et deuxième parties de circonférence (35) situées sur le même cercle, pliées de façon cylindrique et faisant un angle aigu (α) l'une par rapport à l'autre.

5. Phare pour véhicules selon la revendication 4, caractérisé en ce que l'élément de positionnement (34) présente une languette (44) située à l'opposé des première et deuxième parties de circonférence (35).

6. Phare pour véhicules selon la revendication 5, caractérisé en ce que l'élément de positionnement (34) présente sur sa circonférence une patte (42) qui fait saillie.

7. Corps de réflecteur (50) percé d'une ouverture (52) et présentant une limite pour coopérer avec un corps de support d'un phare peur véhicules selon les revendications 4, 5 ou 6, caractérisé en ce que la limite (51) de l'ouverture (52) présente des première et deuxième surfaces d'appui (55) situées sur les jambes d'un V présentant un angle obtus (β) et du côté situé à l'opposé un élément de serrage (61) orienté vers le V.
